# EUROPEAN PATENT APPLICATION

(11) **EP 2 355 026 A1**
(43) Date of publication of application: **10.08.2011**
(21) Application number: 11153193.5
(22) Date of filing: 03.02.2011
(51) Int. Cl.: G06Q 10/00, H04L 12/58

(54) **Data management methods and systems for handheld devices**

(30) Priority: 06.02.2010 TW 99103619
(71) Applicant: HTC Corporation, Taoyuan County 330 (TW)
(72) Inventor: Huang, Fu-Yuang, Taoyuan City, Taoyuan County 330 (TW); Huang, Jen-Yu, Taoyuan City, Taoyuan County 330 (TW)
(74) Representative: 2K Patentanwälte Blasberg Kewitz & Reichel

(57) **Abstract**

Data management methods and systems for handheld devices are provided. First, a plurality of email messages are displayed in a first display area of a touch-sensitive display unit, and at least one tab icon is displayed in a second display area of the touch-sensitive display unit, wherein the tab icon records at least one condition, and the condition is used to determine whether the respective email message has a flag or has a meeting invitation format. A contact corresponding to the tab icon on the touch-sensitive display unit is detected, and in response to the contact, at least one candidate email message having the flag or having the meeting invitation format is filtered from the email messages according to the condition corresponding to the tab icon, and the candidate email message is displayed in the first display area of the touch-sensitive display unit.

## Description

### CROSS REFERENCE TO RELATED APPLICATIONS

This Application claims priority of Taiwan Patent Application No. 099103619, filed on February 06, 2010, the entirety of which is incorporated by reference herein.

### BACKGROUND OF THE INVENTION

### Field of the Invention

The disclosure relates generally to data management methods and systems for handheld devices, and, more particularly to methods and systems that efficiently manage email messages via tab icons displayed in a touch-sensitive display unit.

### Description of the Related Art

Recently, portable devices, such as handheld devices, have become more and more technically advanced and multifunctional. For example, a handheld device may have telecommunication capabilities, e-mail message capabilities, an advanced address book management system, a media playback system, and various other functions. Due to increased convenience and functions of the devices, these devices have become basic necessities of life.

Currently, a handheld device may be equipped with a touch-sensitive display unit. Users can directly perform operations, such as application operations and data input, via the touch-sensitive display unit. In some situations, large amounts of email messages and/or short messages can be displayed in the touch-sensitive display unit. Conventionally, users must use a control unit, such as a direction key or a screen scrolling component to repetitively move/scroll, thus to navigate and retrieve a specific email message through long lists of email messages. Additionally, in some techniques, users can input retrieval conditions to a search interface provided by the handheld device, such that specific email messages can be retrieved among the email messages based on the retrieval conditions.

Generally, conventional navigation and location methods for email messages need a lot of manual operations and switches. The required operation is time-consuming and inconvenient for users.

### BRIEF SUMMARY OF THE INVENTION

Data management methods and systems for handheld devices are provided.

In an embodiment of a data management method for handheld devices, a plurality of email messages are displayed in a first display area of a touch-sensitive display unit, and at least one tab icon is displayed in a second display area of the touch-sensitive display unit. The tab icon records at least one condition, and the condition is used to determine whether the respective email message has a flag or has a meeting invitation format. Then, a contact corresponding to the tab icon on the touch-sensitive display unit is detected, and in response to the contact, the email messages are filtered according to the condition corresponding to the tab icon to obtain at least one candidate email message having the flag or having the meeting invitation format. The candidate email message is displayed in the first display area of the touch-sensitive display unit.

An embodiment of a data management system for handheld devices includes a storage unit, a touch-sensitive display unit and a processing unit. The storage unit stores a plurality of email messages and at least one tab icon. The tab icon records at least one condition, and the condition is used to determine whether the respective email message has a flag or has a meeting invitation format. The touch-sensitive display unit at least has a first display area and a second display area. The first display area displays the email messages, and the second display area displays the tab icon. The processing unit detects a contact corresponding to the tab icon on the touch-sensitive display unit. In response to the contact, the processing unit filters the email messages according to the condition corresponding to the tab icon to obtain at least one candidate email message having the flag or having the meeting invitation format. The processing unit displays the candidate email message in the first display area of the touch-sensitive display unit.

In some embodiments, the condition can be edited via an interface, and the tab icon corresponding to the condition can be generated. In some embodiments, a movement corresponding to the tab icon on the touch-sensitive display unit can be detected. When the tab icon is dragged to a specific area of the second display area, in response to the movement, the tab icon is hided.

In some embodiments, search content can be received via a search interface. At least one specific email message can be searched from the candidate email messages according to the search content, and the specific email message is displayed in the first display area of the touch-sensitive display unit.

In some embodiments, a selection corresponding to one of the email messages/candidate email messages can be received via the touch-sensitive display unit, and in response to the selection, the at least one tab icon is displayed in the touch-sensitive display unit. Similarly, when a contact corresponding to the tab icon is received via the touch-sensitive display unit, the email messages/candidate email messages are further filtered according to the condition corresponding to the tab icon.

Data management methods for handheld devices may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description with reference to the accompanying drawings, wherein:

Fig. 1 is a schematic diagram illustrating an embodiment of a data management system for handheld devices of the invention;

Fig. 2 is a schematic diagram illustrating an embodiment of a touch-sensitive display unit of the invention;

Fig. 3 is a schematic diagram illustrating an embodiment of a second display area of the touch-sensitive display unit of the invention;

Fig. 4 is a schematic diagram illustrating an embodiment of a storage unit of the invention;

Fig. 5 is a schematic diagram illustrating an embodiment of the architecture of a handheld device of the invention;

Fig. 6 is a flowchart of an embodiment of a data management method for handheld devices of the invention;

Fig. 7 is a flowchart of another embodiment of a data management method for handheld devices of the invention;

Fig. 8 is a flowchart of an embodiment of a method for hiding tab icons of the invention;

Fig. 9 is a schematic diagram illustrating an embodiment of a result when a tab icon corresponding to a flag is selected of the invention; and

Fig. 10 is a schematic diagram illustrating an embodiment of a result when a tab icon corresponding to a meeting invitation is selected of the invention.

### DETAILED DESCRIPTION OF THE INVENTION

Data management methods and systems for handheld devices are provided.

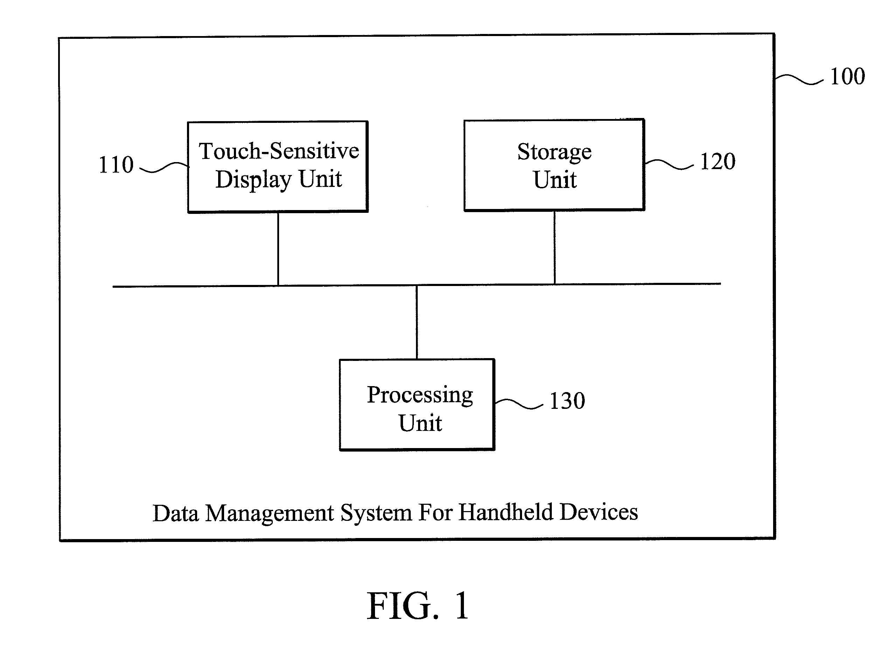

Fig. 1 is a schematic diagram illustrating an embodiment of a data management system for handheld devices of the invention. The data management system for handheld devices 100 can be used in an electronic device, such as handheld devices such as a PDA (Personal Digital Assistant), a smart phone, a mobile phone, an MID (Mobile Internet Device, MID), and a Netbook.

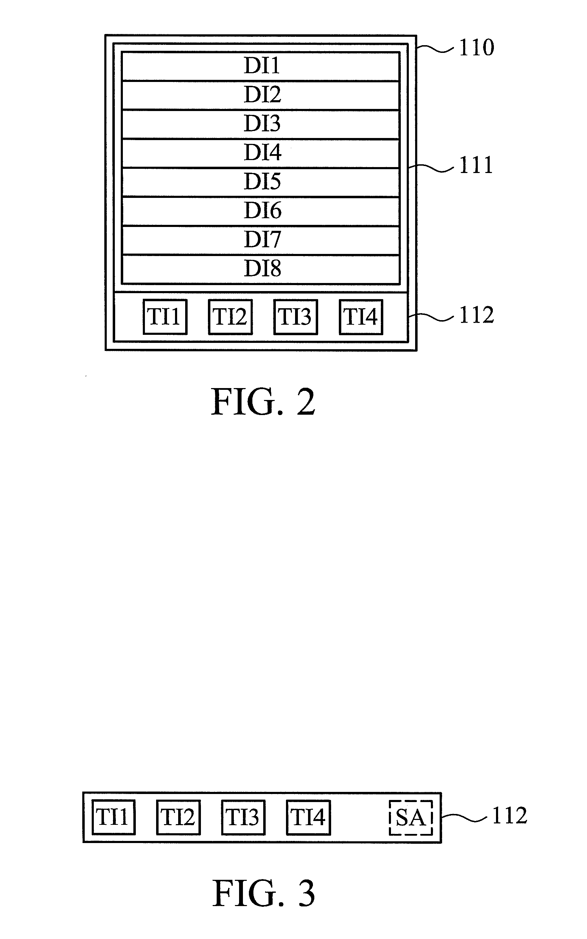

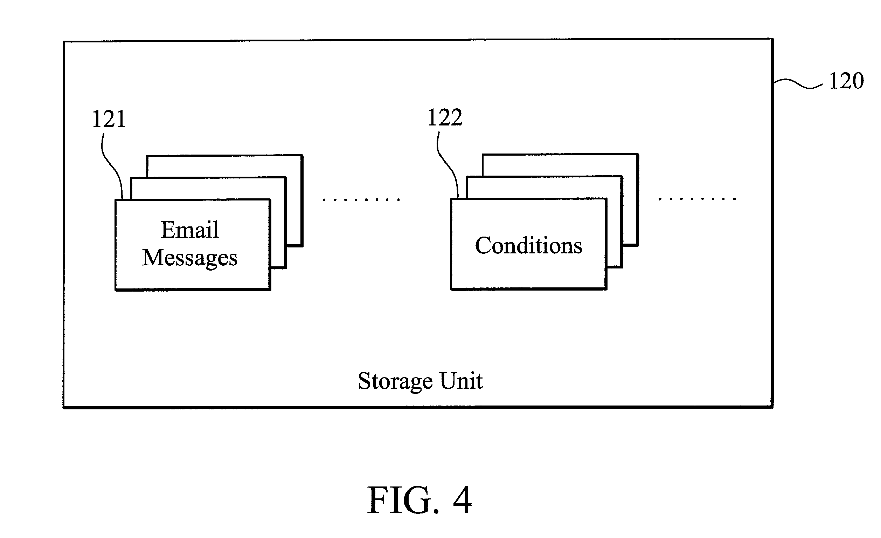

The data management system for handheld devices 100 comprises a touch-sensitive display unit 110, a storage unit 120, and a processing unit 130. The touch-sensitive display unit 110 is a screen integrated with a touch-sensitive device (not shown). The touch-sensitive device has a touch-sensitive surface comprising sensors in at least one dimension to detect contact and movement of an input tool, such as a stylus or finger on the touch-sensitive surface. The touch-sensitive display unit 110 can display related data, and/or related figures and interfaces. Fig. 2 is a schematic diagram illustrating an embodiment of a touch-sensitive display unit of the invention. As shown in Fig. 2, the touch-sensitive display unit 110 can comprise a first display area 111 and a second display area 112. The first display area 111 can display a plurality of email messages (DI1, DI2, DI3, DI4, DI5, DI6, DI7 and DI8). It is noted that, the email messages displayed in the first display area 111 may be the respective email message itself or identification information corresponding to the respective email message. It is understood that, the second display area 112 can display at least one tab icon (TI1, TI2, TI3 and TI4). It is noted that, each tab icon may have a condition. Additionally, in some embodiments, the data management system for handheld devices 100 can provide an interface (not shown) for editing the condition, and generating the tab icon corresponding to the condition. The edited and generated tab icon can be displayed in the second display area 112. It is understood that, in some embodiments, the second display area 112 may have a specific area SA, as shown in Fig. 3. The use of the specific area SA will be discussed later. Fig. 4 is a schematic diagram illustrating an embodiment of a storage unit of the invention. The storage unit 120 can comprise email messages 121, which can be provided to the touch-sensitive display unit 110 for display. Additionally, the storage unit 120 can comprise conditions 122 corresponding to the respective tab icons. It is understood that, in some embodiments, the condition can be used to determine whether the respective email message has a flag or has a meeting invitation format. The processing unit 130 performs the data management method for handheld devices of the invention, which will be discussed further in the following paragraphs.

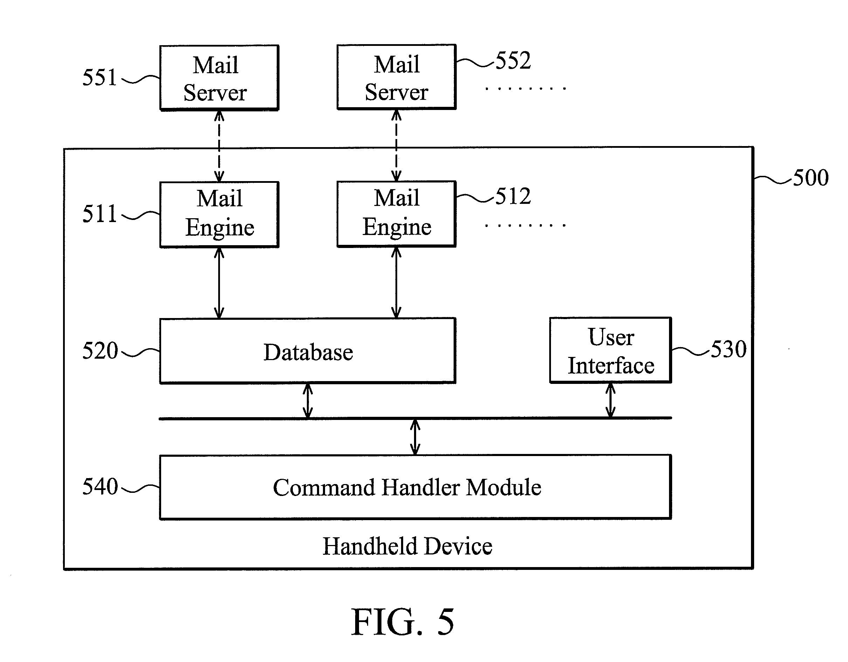

Fig. 5 is a schematic diagram illustrating an embodiment of the architecture of a handheld device of the invention.

As shown in Fig. 5, the handheld device 500 can comprises at least one mail engine (511 and 512), a database 520, a user interface 530 and a command handler module 540. Each mail engine can couple to a corresponding mail server, thus to synchronize and receive email messages with/from the mail server. For example, the mail engine 511 can couple to the mail server 551, thus to receive email messages from the mail server 551. The mail engine 512 can couple to the mail server 552, thus to receive email messages from the mail server 552. It is noted that, in some embodiments, each mail engine can support different mail formats, such as Microsoft Exchange, IMAP (Internet Message Access Protocol) and POP (Post Office Protocol). The email messages received by the mail engines can be stored in the database 520. The user interface 530 can receive related inputs from users. The command handler module 540 can convert the user inputs into corresponding commands, and retrieve related email messages from the database 520 according to the commands. Users can view meeting invitations based on the architecture of the invention, thus to quickly realize the amount of received meeting invitations and related information.

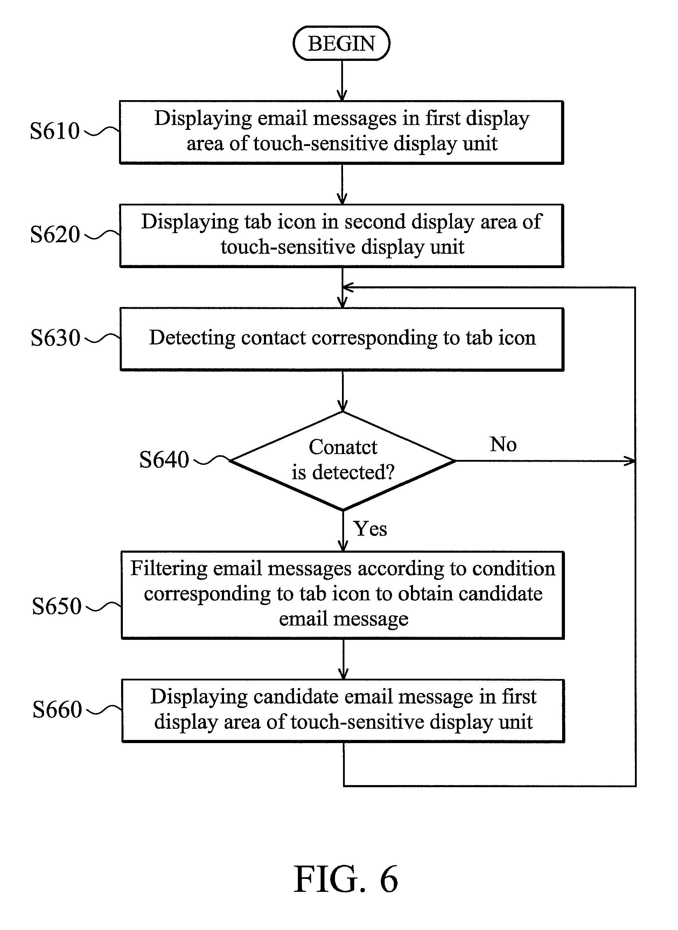

Fig. 6 is a flowchart of an embodiment of a data management method for handheld devices of the invention. The data management method for handheld devices can be used in an electronic device, such as a portable device comprising handheld devices such as a PDA, a smart phone, a mobile phone, an MID, and a Netbook.

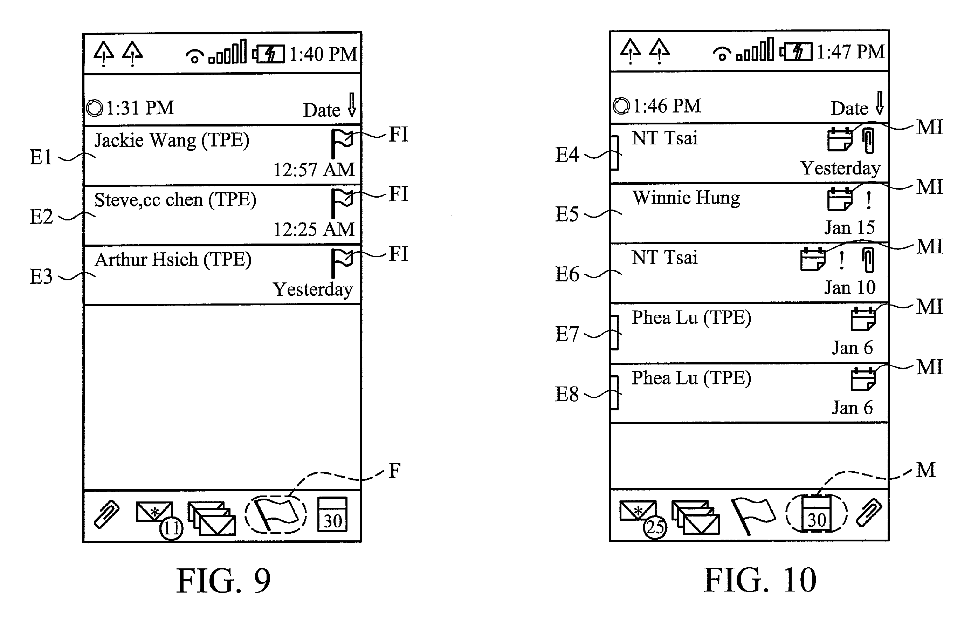

In step S610, a plurality of email messages are displayed in the first display area of the touch-sensitive display unit, and in step S620, at least one tab icon is displayed in the second display area of the touch-sensitive display unit. It is understood that, the tab icon records at least one condition, and the condition is used to determine whether the respective email message has a flag or has a meeting invitation format. In step 5630, it is determined whether a contact corresponding to one of the tab icons of an input tool, such as a finger or stylus on the touch-sensitive display unit is detected. If no contact corresponding to the tab icon is detected (No in step S640), the procedure returns to step S630. If a contact corresponding to the tab icon is detected (Yes in step S640), in step S650, the email messages are filtered according to the condition corresponding to the contacted tab icon to obtain at least one candidate email message. It is understood that, in this embodiment, the condition corresponding to the tab icon can be defined to determine whether the respective email message has a flag or has a meeting invitation format. For example, the handheld device can provide a tab icon F corresponding to the flag and the condition corresponding to the tab icon F can be defined to determine whether the respective email message has a flag representing that the email message is important or has a flag representing that the email message is waiting to be handled. When the tab icon F corresponding to the flag is contacted/selected, the email messages are filtered to obtain candidate email messages (E1, E2 and E3) having flags representing that the email messages are important or flags representing that the email messages are waiting to be handled, and the candidate email messages are displayed in the touch-sensitive display unit, as shown in Fig. 9. Similarly, the email messages displayed in the touch-sensitive display unit may be the respective email message itself or identification information corresponding to the respective email message. In this example, the information displayed in the touch-sensitive display unit can further comprise a flag icon FI, representing that the email message has a flag. Additionally, the handheld device can provide a tab icon M corresponding to the meeting invitation, and the condition corresponding to the tab icon M can be defmed to determine whether the respective email message has a meeting invitation format, such as IPM_SCHEDULE format defined by Microsoft Exchange. When the tab icon M corresponding to the meeting invitation is contacted/selected, the email messages are filtered to obtain candidate email messages (E4, E5, E6, E7 and E8) having the meeting invitation format, and the candidate email messages are displayed in the touch-sensitive display unit, as shown in Fig. 10. Similarly, the email messages displayed in the touch-sensitive display unit may be the respective email message itself or identification information corresponding to the respective email message. In this example, the information displayed in the touch-sensitive display unit can further comprise a meeting invitation icon MI, representing that the email message has the meeting invitation format. After the at least one candidate email message is obtained, in step S660, the candidate email message is displayed in the first display area of the touch-sensitive display unit.

It is noted that, in the embodiment of Fig. 6, candidate email messages having the flag or having the meeting invitation format can be obtained from the email messages based on the condition corresponding to the tab icon. However, the invention is not limited thereto. For example, in some embodiments, the condition corresponding to the tab icon can be defined to determine whether the respective email message and a specific email message, such as a highlighted email message currently displayed in the touch-sensitive display unit belong to the same specific group and/or specific subject.

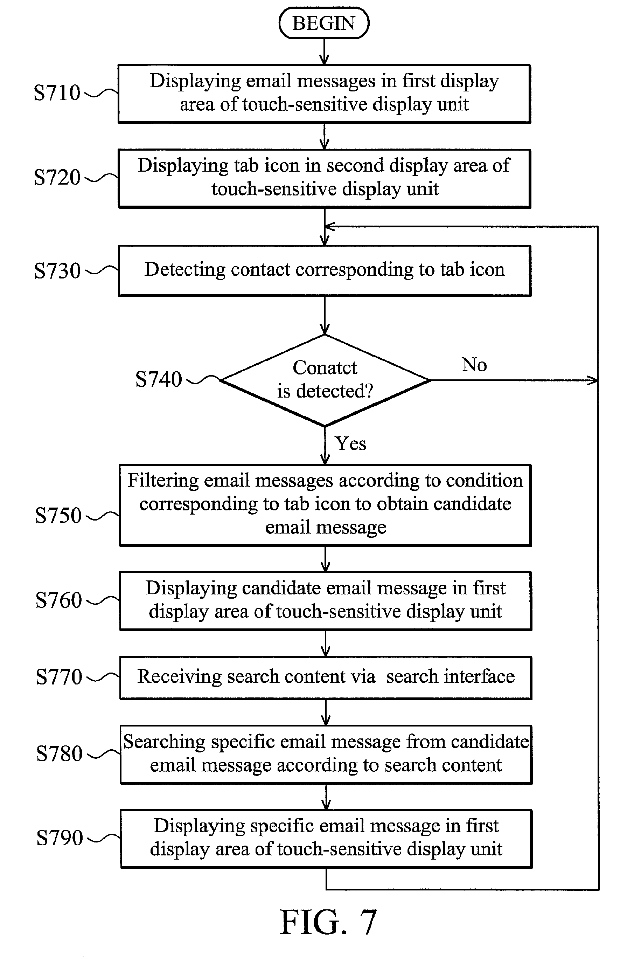

Fig. 7 is a flowchart of another embodiment of a data management method for handheld devices of the invention. The data management method for handheld devices can be used in an electronic device, such as a portable device comprising handheld devices such as a PDA, a smart phone, a mobile phone, an MID, and a Netbook.

In step S710, a plurality of email messages are displayed in the first display area of the touch-sensitive display unit, and in step S720, at least one tab icon is displayed in the second display area of the touch-sensitive display unit. It is understood that, the tab icon records at least one condition, and the condition is used to determine whether the respective email message has a flag or has a meeting invitation format. In step S730, it is determined whether a contact corresponding to one of the tab icons of an input tool, such as a finger or stylus on the touch-sensitive display unit is detected. If no contact corresponding to the tab icon is detected (No in step S740), the procedure returns to step S730. If a contact corresponding to the tab icon is detected (Yes in step S740), in step S750, the email messages are filtered according to the condition corresponding to the contacted tab icon to obtain at least one candidate email message. Similarly, in this embodiment, the condition corresponding to the tab icon can be defined to determine whether the respective email message has a flag or has a meeting invitation format. Additionally, in some embodiments, the condition corresponding to the tab icon can be defined to determine whether the respective email message and a specific email message, such as a highlighted email message currently displayed in the touch-sensitive display unit belong to the same specific group and/or specific subject. After the at least one candidate email message is obtained, in step S760, the candidate email message is displayed in the first display area of the touch-sensitive display unit. Then, in step S770, search content is received via a search interface. In step S780, at least one specific email message is searched from the at least one candidate email message according to the search content, and in step S790, the specific email message is displayed in the first display area of the touch-sensitive display unit.

It is understood that, in some embodiments, a user can select one of the email messages/candidate email messages/specific email messages via the touch-sensitive display unit. After the selection is received, at least one tab icon is displayed at a specific position, such as the position of the selected email message in the touch-sensitive display unit. Similarly, when a contact corresponding to the tab icon is received via the touch-sensitive display unit, the email messages/candidate email messages/specific email messages are further filtered according to the condition corresponding to the tab icon.

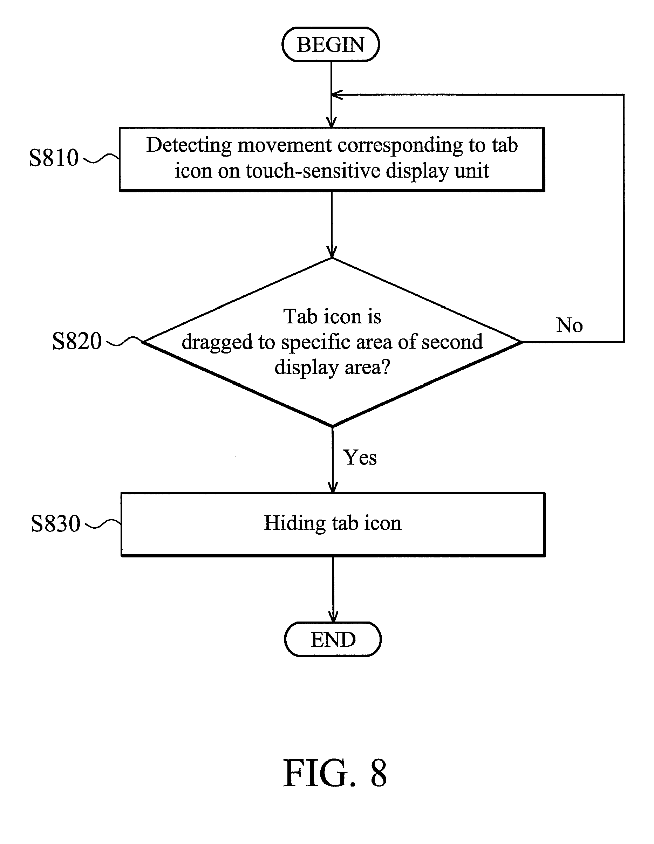

Fig. 8 is a flowchart of an embodiment of a method for hiding tab icons of the invention. In this embodiment, the tab icon displayed in the second display area of the touch-sensitive display unit can be hidden.

In step S810, a movement corresponding to one of the at least one tab icon of an input tool, such as a finger or stylus on the touch-sensitive display unit is detected. In step S820, it is determined whether the movement corresponding to the tab icon indicates that the tab icon has been dragged to a specific area of the second display area. When the movement corresponding to the tab icon indicates that the tab icon has not been dragged to the specific area of the second display area (No in step S820), the procedure returns to step S810. When the movement corresponding to the tab icon indicates that the tab icon has been dragged to the specific area of the second display area (Yes in step S820), in step S830, the tab icon is hided.

It is noted that, in some embodiments, the specific area of the second display area can be illustrated using a specific figure. When the specific figure is selected, the hided tab icon can be re-displayed in the second display area. Additionally, in some embodiments, the hided tab icon can be further dragged out from the specific area, such that the tab icon can be re-displayed in the second display area.

Therefore, the data management methods and systems for handheld devices can efficiently display and manage email messages and/or short messages via tab icons displayed in the touch-sensitive display unit, thus increasing convenience and efficiency of data navigation and selection. With the convenience and efficiency of data navigation and locating increased, related system resources, such as power and CPU resources of electronic devices, required for handling minute and complicated operation of users, can be substantially reduced.

Data management methods for handheld devices, or certain aspects or portions thereof, may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for practicing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalents.

## Claims

1. A data management method for handheld devices, for use in an electronic device, comprising:
displaying a plurality of email messages in a first display area of a touch-sensitive display unit;
displaying at least one tab icon in a second display area of the touch-sensitive display unit, wherein the tab icon records at least one condition, and the condition is used to determine whether the respective email message has a flag or has a meeting invitation format;
detecting a contact corresponding to the tab icon on the touch-sensitive display unit;
in response to the contact, filtering the email messages according to the condition corresponding to the tab icon to obtain at least one candidate email message having the flag or having the meeting invitation format; and
displaying the candidate email message in the first display area of the touch-sensitive display unit.

2. The method of claim 1, further providing an interface for editing the condition, and generating the tab icon corresponding to the condition.

3. The method of claim 1 or 2, further comprising:
detecting a movement corresponding to the tab icon on the touch-sensitive display unit, wherein the tab icon is dragged to a specific area of the second display area; and
in response to the movement, hiding the tab icon.

4. The method of any of the preceding claims, further comprising:
providing a search interface for receiving search content;
searching at least one specific email message from the at least one candidate email message according to the search content; and
displaying the specific email message in the first display area of the touch-sensitive display unit.

5. The method of any of the preceding claims, further comprising:
receiving a selection corresponding to one of the at least one candidate email message via the touch-sensitive display unit; and
in response to the selection, displaying the at least one tab icon in the touch-sensitive display unit,
wherein when a contact corresponding to the tab icon is received via the touch-sensitive display unit, the email messages are further filtered according to the condition corresponding to the tab icon.

6. A data management system for handheld devices, for use in an electronic device, in particular for performing the method according to any of the preceding claims, comprising:
a storage unit comprising a plurality of email messages and at least one tab icon, wherein the tab icon records at least one condition, and the condition is used to determine whether the respective email message has a flag or has a meeting invitation format;
a touch-sensitive display unit comprising a first display area for displaying the email messages, and a second display area for displaying the at least one tab icon; and
a processing unit detecting a contact corresponding to the tab icon on the touch-sensitive display unit, in response to the contact, filtering the email messages according to the condition corresponding to the tab icon to obtain at least one candidate email message having the flag or having the meeting invitation format, and displaying the candidate email message in the first display area of the touch-sensitive display unit.

7. The system of claim 6, wherein the processing unit further provides an interface for editing the condition, and generating the tab icon corresponding to the condition.

8. The system of claim 6 or 7, wherein the processing unit further detects a movement corresponding to the tab icon on the touch-sensitive display unit, wherein the tab icon is dragged to a specific area of the second display area, and in response to the movement, the processing unit hides the tab icon.

9. The system of any of claims 6 to 8, wherein the processing unit further provides a search interface for receiving search content, and the processing unit searches at least one specific email message from the at least one candidate email message according to the search content, and displays the specific email message in the first display area of the touch-sensitive display unit.

10. The system of any of claims 6 to 9, wherein the processing unit further receives a selection corresponding to one of the at least one candidate email message via the touch-sensitive display unit, and in response to the selection, displays the at least one tab icon in the touch-sensitive display unit, wherein when a contact corresponding to the tab icon is received via the touch-sensitive display unit, the email messages are further filtered according to the condition corresponding to the tab icon.

11. A machine-readable storage medium comprising a computer program, which, when executed, causes a device to perform a data management method for handheld devices as claimed in any of claims 1 to 5.

12. The machine-readable storage medium as claimed in claim 11, wherein the data management method for handheld devices comprises:
displaying a plurality of email messages in a first display area of a touch-sensitive display unit;
displaying at least one tab icon in a second display area of the touch-sensitive display unit, wherein the tab icon records at least one condition, and the condition is used to determine whether the respective email message has a flag or has a meeting invitation format;
detecting a contact corresponding to the tab icon on the touch-sensitive display unit;
in response to the contact, filtering the email messages according to the condition corresponding to the tab icon to obtain at least one candidate email message having the flag or having the meeting invitation format; and
displaying the candidate email message in the first display area of the touch-sensitive display unit.
